# EUROPEAN PATENT APPLICATION

(11) **EP 4 520 503 A1**
(43) Date of publication of application: **12.03.2025**
(21) Application number: 24185141.9
(22) Date of filing: 27.06.2024
(51) Int. Cl.: B29C 45/14, B29C 64/118, B29C 69/00, B29C 70/48, B33Y 10/00, B33Y 80/00, B29K 101/12, B29K 105/00, B29K 307/04

(54) **THERMOPLASTIC COMPOSITE COMPONENTS AND METHOD FOR FORMING SAME**

(30) Priority: 27.06.2023 IN 202311043165
(71) Applicant: Rohr, Inc., Chula Vista, CA 91910-2098 (US)
(72) Inventor: TUDOR, Bruce, Payson, 85541 (US); RAO, Sreekanth, 560061 Bangalore (IN)
(74) Representative: Dehns

(57) **Abstract**

A method for forming a thermoplastic composite component (20) includes forming a composite sheet (22) using an additive manufacturing assembly (36). The composite sheet (22) includes a thermoplastic continuous-fiber body (24) including a first side surface (28), a second side surface (30), and a perimeter edge (32). The first side surface (28) is disposed opposite the second side surface (30). The perimeter edge (32) circumscribes the first side surface (28) and the second side surface (30). The method further includes applying a thermoplastic overmold (62) onto the thermoplastic continuous-fiber body (24) along at least the perimeter edge (32) using an injection molding assembly (50).

## Description

### BACKGROUND

### 1. Technical Field

This disclosure relates generally to thermoplastic composite components for aircraft and, more particularly, to methods for forming thermoplastic continuous-fiber composite components for aircraft.

### 2. Background Information

Modern aircraft include many different structural components. Many of these components may have high-strength and/or high-durability characteristics to facilitate suitable structural strength, safety, and performance requirements for the associated aircraft. While known components and methods for manufacturing these composite components have various advantages, there is still room in the art for improvement. There is a need in the art therefore for improved aircraft components and method for forming these components.

### SUMMARY

It should be understood that any or all of the features or embodiments described herein can be used or combined in any combination with each and every other feature or embodiment described herein unless expressly noted otherwise.

According to an aspect of the present disclosure, a method for forming a thermoplastic composite component includes forming a composite sheet using an additive manufacturing assembly. The composite sheet includes a thermoplastic continuous-fiber body including a first side surface, a second side surface, and a perimeter edge. The first side surface is disposed opposite the second side surface. The perimeter edge circumscribes the first side surface and the second side surface. The method further includes applying a thermoplastic overmold onto the thermoplastic continuous-fiber body along at least the perimeter edge using an injection molding assembly.

In any of the aspects or embodiments described above and herein, the method may further include applying a thermoplastic continuous-fiber perimeter band onto the perimeter edge subsequent to forming the composite sheet and prior to applying the thermoplastic overmold onto the thermoplastic continuous-fiber body.

In any of the aspects or embodiments described above and herein, applying the thermoplastic overmold onto the thermoplastic continuous-fiber body may include applying the thermoplastic overmold onto the thermoplastic continuous-fiber band.

In any of the aspects or embodiments described above and herein, forming the composite sheet may include forming at least one aperture of the composite sheet. The at least one aperture may extend through the thermoplastic continuous-fiber body from the first side surface to the second side surface.

In any of the aspects or embodiments described above and herein, applying the thermoplastic overmold onto the thermoplastic continuous-fiber body may include applying the thermoplastic overmold onto one or both of the first side surface and the second side surface along the at least one aperture.

In any of the aspects or embodiments described above and herein, forming the composite sheet may include depositing a plurality of layers of a continuous-fiber tape with the additive manufacturing assembly.

In any of the aspects or embodiments described above and herein, the continuous-fiber tape may include a continuous carbon fiber reinforcing material impregnated with a thermoplastic polymeric matrix material.

In any of the aspects or embodiments described above and herein, the injection molding assembly may include a mold and applying the thermoplastic overmold onto the thermoplastic continuous-fiber body may include positioning the thermoplastic continuous-fiber body in the mold and injecting a heated and pressurized molten thermoplastic overmold material into the mold to form the thermoplastic overmold on the thermoplastic continuous-fiber body.

In any of the aspects or embodiments described above and herein, applying the thermoplastic overmold onto the thermoplastic continuous-fiber body may further include reducing a void content of the thermoplastic continuous-fiber body to less than one percent by volume of the thermoplastic continuous-fiber body.

According to another aspect of the present disclosure, a method for forming a thermoplastic composite component includes forming a composite sheet using an additive manufacturing assembly. The composite sheet includes a thermoplastic continuous-fiber body including a first side surface, a second side surface, and a perimeter edge. The first side surface is disposed opposite the second side surface. The perimeter edge circumscribes the first side surface and the second side surface. The method further includes applying a thermoplastic continuous-fiber perimeter band onto the perimeter edge and applying a thermoplastic overmold onto the thermoplastic continuous-fiber perimeter band, the first side, and the second side using an injection molding assembly.

In any of the aspects or embodiments described above and herein, the thermoplastic continuous-fiber perimeter band may extend completely about the composite sheet along the perimeter edge.

In any of the aspects or embodiments described above and herein, the thermoplastic overmold may form a perimeter overmold portion extending about the composite sheet along the continuous-fiber perimeter band.

In any of the aspects or embodiments described above and herein, forming the composite sheet may include depositing a plurality of layers of a continuous-fiber tape with the additive manufacturing assembly.

In any of the aspects or embodiments described above and herein, the continuous-fiber tape may include a continuous carbon fiber reinforcing material impregnated with a thermoplastic polymeric matrix material.

In any of the aspects or embodiments described above and herein, applying the thermoplastic overmold onto the thermoplastic continuous-fiber perimeter band, the first side, and the second side may further include reducing a void content of the thermoplastic continuous-fiber body to less than one percent by volume of the thermoplastic continuous-fiber body.

According to another aspect of the present disclosure, a method for forming a thermoplastic composite component includes forming a composite sheet using an additive manufacturing assembly, the composite sheet including a thermoplastic continuous-fiber body and applying a thermoplastic overmold onto the thermoplastic continuous-fiber body with an injection molding assembly by positioning the thermoplastic continuous-fiber body between a first mold plate and a second mold plate of a mold of the injection molding assembly and injecting a heated and pressurized molten thermoplastic overmold material into the mold to form the thermoplastic overmold on the thermoplastic continuous-fiber body and to reduce a void content of the thermoplastic continuous-fiber body to less than one percent by volume of the thermoplastic continuous-fiber body.

In any of the aspects or embodiments described above and herein, the thermoplastic continuous-fiber body may include a first side surface, a second side surface, and a perimeter edge. The first side surface may be disposed opposite the second side surface. The perimeter edge may circumscribe the first side surface and the second side surface. The thermoplastic continuous-fiber body may form one or more apertures of the composite sheet. The one or more apertures may extend through the thermoplastic continuous-fiber body from the first side surface to the second side surface.

In any of the aspects or embodiments described above and herein, the thermoplastic overmold may include a perimeter overmold portion disposed on the perimeter edge, the first side, and the second side.

In any of the aspects or embodiments described above and herein, the perimeter overmold portion may extend completely around the thermoplastic continuous-fiber body along the perimeter edge.

In any of the aspects or embodiments described above and herein, the thermoplastic overmold may include an aperture overmold portion disposed on the first side, the second side, and the thermoplastic continuous-fiber body within a first aperture of the one or more apertures.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of a component, in accordance with one or more embodiments of the present disclosure.
FIG. 2 illustrates a block diagram depicting a method for forming a thermoplastic composite component, in accordance with one or more embodiments of the present disclosure.
FIGS. 3A-C illustrate sequential side views for the formation of a component using the method of FIG. 2, in accordance with one or more embodiments of the present disclosure.
FIG. 4A illustrates a cross-sectional view of the component of FIG. 3A taken along line 4A-4A of FIG. 3A, in accordance with one or more embodiments of the present disclosure.
FIG. 4B illustrates a cross-sectional view of the component of FIG. 3B taken along line 4B-4B of FIG. 3B, in accordance with one or more embodiments of the present disclosure.
FIG. 4C illustrates a cross-sectional view of the component of FIG. 3C taken along line 4C-4C of FIG. 3C, in accordance with one or more embodiments of the present disclosure.
FIG. 5 diagrammatically illustrates a portion of an additive manufacturing assembly, in accordance with one or more embodiments of the present disclosure.
FIG. 6 diagrammatically illustrates a cutaway view of a portion of an injection molding assembly, in accordance with one or more embodiments of the present disclosure.

### DETAILED DESCRIPTION

The present disclosure is directed to systems and methods for forming a thermoplastic composite component. The present disclosure provides particular utility when implemented for the manufacture of high strength, low weight, and lost cost components such as those which may be used for aircraft. The systems and methods of the present disclosure, however, are not limited to use for forming components for a particular apparatus or technical field.

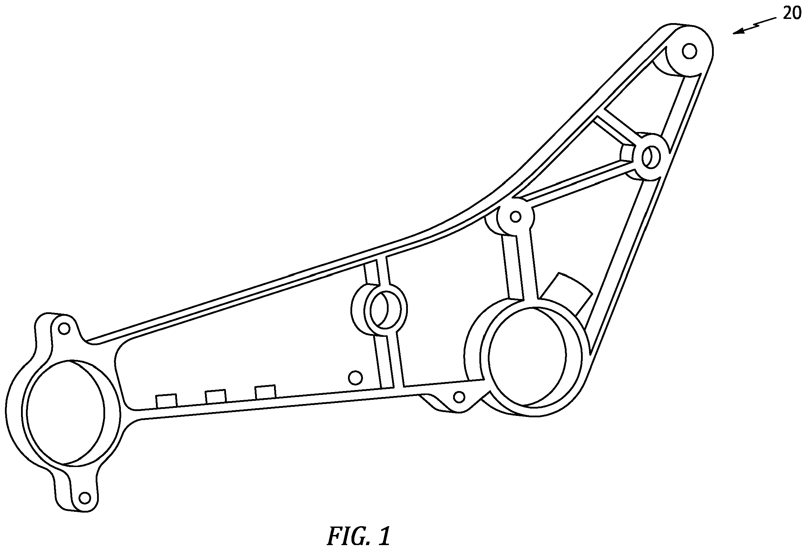

FIG. 1 illustrates a perspective view of an exemplary component 20 which may be formed using the systems and methods of the present disclosure. The component 20 is configured as a structural component for an aircraft seat and which is generally referred to as a "spreader" or a "spreader bar." Components, such as the component 20, may be manufactured with a focus on structural strength and durability (e.g., to comply with various aircraft regulatory requirements). As an example, aircraft seat spreaders, such as the component 20, may conventionally be formed from aluminum or other metals or metal alloys to provide suitable structural support for an associated aircraft seat. However, these metal and metal alloy components may add considerable weight to an associated aircraft; particularly where dozens or hundreds of the components may be included in the aircraft. While the aircraft seat spreader component 20 of FIG. 1 is used to explain aspects of the present disclosure, it should be understood that the present disclosure is not limited to components for a particular apparatus or technical field, as previously discussed.

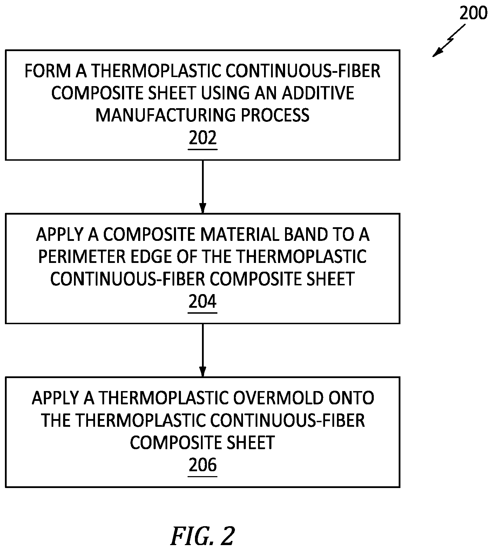

Referring to FIGS. 2-4, a Method 200 for forming a thermoplastic composite component (e.g., the component 20) is provided. FIG. 2 illustrates a flowchart for the Method 200. Unless otherwise noted herein, it should be understood that the steps of Method 200 are not required to be performed in the specific sequence in which they are discussed below and, in some embodiments, the steps of Method 200 may be performed separately or simultaneously.

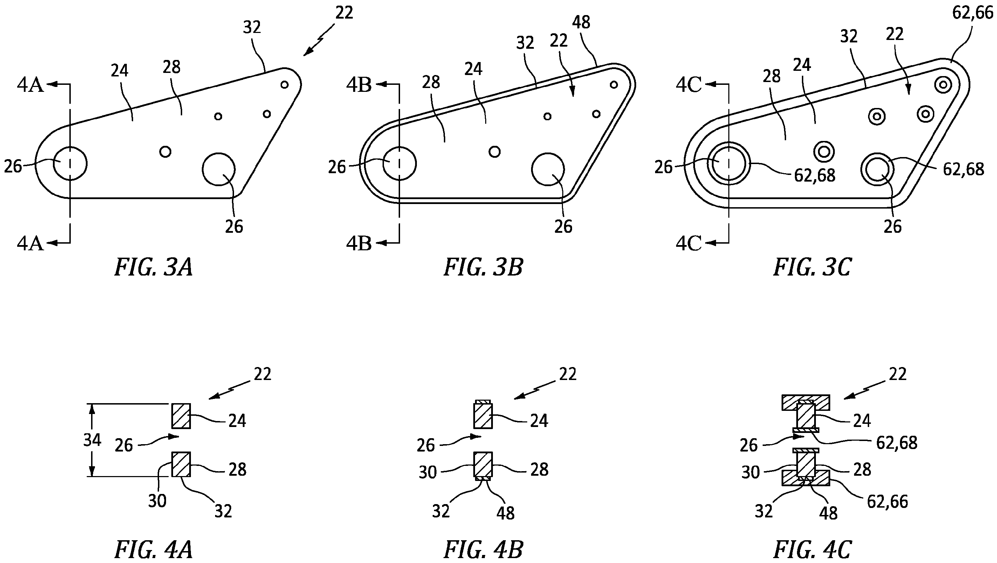

Step 202 includes forming a composite structure using an additive manufacturing process (e.g., an automated fiber placement (AFP) additive manufacturing process). For example, the additive manufacturing process may be used to form a composite sheet 22. FIG. 3A illustrates a side view of the composite sheet 22. FIG. 4A illustrates a cross-sectional view of the composite sheet 22 taken along line 4A-4A of FIG. 3A. The composite sheet 22 includes a composite body 24. The composite sheet 22 may further include one or more apertures 26.

The composite body 24 of FIGS. 3A-C and 4A-C includes a first side surface 28, a second side surface 30, and a perimeter edge 32. The first side surface 28 is disposed opposite the second side surface 30. The perimeter edge 32 extends from the first side surface 28 to the second side surface 30. The perimeter edge 32 circumscribes the first side surface 28 and the second side surface 30. The composite body 24 has a body thickness 34 extending from the first side surface 28 to the second side surface 30.

The composite body 24 may surround and form the one or more apertures 26 of the composite sheet 22. For example, each aperture 26 may extend through the body thickness 34 of the composite body 24 from the first side surface 28 to the second side surface 30. The one or more apertures 26 may be configured to accommodate fasteners and/or to provide an interface between the component 20 and other components of an assembly (e.g., an aircraft seat assembly).

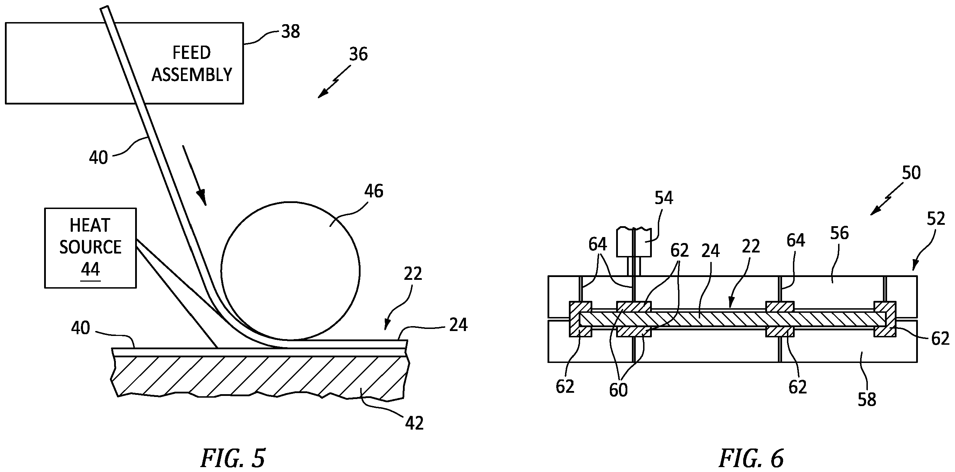

The additive manufacturing process for forming the composite sheet 22 may be performed using an additive manufacturing assembly 36. FIG. 5 illustrates an exemplary configuration of the additive manufacturing assembly 36 and the present disclosure is not limited to the particular additive manufacturing assembly 36 of FIG. 5. The additive manufacturing assembly 36 of FIG. 5 is configured as an automated fiber placement (AFP) assembly for additively manufacturing a continuous-fiber composite structure. The additive manufacturing assembly 36 of FIG. 5 includes a feed assembly 38. The feed assembly 38 is configured to direct (e.g., feed) a composite material tape 40, for example, onto a mandrel 42 or other support structure. The additive manufacturing assembly of FIG. 5 includes a heat source 44 (e.g., a laser, a heated gas nozzle, etc.) configured to heat the composite material tape 40 as the composite material tape 40 is deposited onto the mandrel 42 or onto a previously deposited layer of the composite material tape 40. The additive manufacturing assembly 36 may further include a consolidation roller 46 configured to apply consolidation pressure to a deposited layer of the composite material tape 40.

The composite material tape 40 includes a fiber-reinforcing material. The fiber-reinforcing material includes a plurality of reinforcing fibers. The reinforcing fibers may be carbon fibers, glass fibers, aramid or para-aramid synthetic fibers, or the like. The reinforcing fibers of the composite material tape 40 are continuous fibers. Continuous fibers generally include very high fiber length-to-diameter ratios, for example, relative to discontinuous fibers (e.g., chopped fibers. The continuous fibers may be assembled together in a single direction (e.g., a unidirectional configuration). The composite material tape 40 may be configured as a preimpregnated tape (e.g., a "pre-preg" tape or a "tow-preg" tape in which the fiber-reinforcing material has been impregnated (e.g., saturated) with a polymeric matrix material. The polymeric matrix material includes one or more thermoplastic polymer materials. For example, the polymeric matrix material may include high-temperature thermoplastic resins such as, but not limited to, polyether ketone ketone (PEKK), polyether ether ketone (PEEK), polyaryletherketone (PAEK), polyphenylene sulfide (PPS), or the like.

Forming the composite body 24 using the additive manufacturing process may include sequentially (e.g., layer by layer) depositing a plurality of composite material layers of the composite material tape 40 on top of one another. For example, the deposited composite material tape 40 may bond with the composite material of the preceding composite material tape 40 layer. The composite material tape 40 for composite material layers of the composite body 24 may generally be laid (e.g., oriented) at perpendicular or oblique angles relative to the composite material tape 40 for adjacent composite material layers. For example, the composite material tape 40 for each composite material layer may be disposed at an oblique angle relative to the composite material tape 40 of the preceding composite material layer. Depositing the plurality of composite material layers as previously discussed forms the composite body 24 as a monolithic body in an uncured or partially cured condition. As will be discussed in further detail below, depositing the composite material tape 40 layers (e.g., with relatively low deposition pressure) may result in the formation of voids (e.g., gas bubbles) between the composite material layers of the composite body 24.

Forming additively manufactured composites may conventionally be followed by post-printing consolidation and/or other finishing techniques. For example, a compression molding process may be applied to an additively manufactured continuous-fiber composite material to cure and shape the composite material to form a finished or substantially finished component. However, compression molding processes may generally be relatively slow and, therefore, may add a considerable amount of time to the manufacture of a composite component. Moreover, compression molding equipment which is suitable for forming high-strength composite components may be relatively expensive, thereby greatly increasing the cost associated with manufacturing composite components.

Step 204 includes, optionally, applying a composite material band 48 to the composite body 24. The composite material band 48 of FIGS. 3B and 4B is disposed on the perimeter edge 32. For example, the composite material band 48 of FIGS. 3B and 4B extends along the perimeter edge 32 (e.g., the entire perimeter edge 32) about the composite body 24. Like the composite material tape 40, the composite material band 48 includes a fiber-reinforcing material and a polymeric matrix material. The reinforcing fibers of the composite material band 48 may be carbon fibers, glass fibers, aramid or para-aramid synthetic fibers, or the like. The reinforcing fibers of the composite material tape 40 are unidirectional continuous fibers. The polymeric matrix material of the composite material band 48 includes one or more thermoplastic polymer materials. For example, the polymeric matrix material may include high-temperature thermoplastic resins such as, but not limited to, polyether ketone ketone (PEKK), polyether ether ketone (PEEK), polyaryletherketone (PAEK), polyphenylene sulfide (PPS), or the like. The composite material band 48 may generally have a width which is greater than a width of the composite material tape 40. For example, the composite material band 48 may extend along all or a substantial portion (e.g., a majority of) the thickness 34 at the perimeter edge 32.

Step 206 includes applying a thermoplastic overmold onto the composite body 24. The composite sheet 22 may be installed into an injection molding assembly 50 as shown, for example, in FIG. 6. FIG. 6 illustrates an exemplary configuration of the injection molding assembly 50 and the present disclosure is not limited to the particular injection molding assembly 50 of FIG. 6. The injection molding assembly 50 of FIG. 6 includes a mold 52 and an injection nozzle 54. The mold 52 of FIG. 6 includes an upper mold plate 56 and a lower mold plate 58. The composite sheet 22 is positioned between the upper mold plate 56 and the lower mold plate 58. The upper mold plate 56 and the lower mold plate 58 are shaped, for example, with one or more recesses 60 (e.g., cavities), to shape and form a thermoplastic overmold 62 (e.g., an overmold portion of the component 20) on the composite body 24. Each of the upper mold plate 56 and the lower mold plate 58 may form one or more sprues 64 (e.g., apertures, channels, etc.) configured to direct an injection molding material from the injection nozzle 54, through the respective mold plate 56, 58, and to the composite sheet 22. The injection nozzle 54 is positioned at each sprue 64 to inject a heated and pressurized molten thermoplastic overmold material into the mold 52 to form the thermoplastic overmold 62 on the composite body 24.

The thermoplastic overmold 62 formed on the composite body 24 may form cosmetic features of the component 20, mating surfaces of the component 20, and/or other structural features of the component 20 which may not bear substantial mechanical loads (e.g., relative to other portions of the component 20 formed by the composite sheet 22). The thermoplastic overmold 62 may be formed on all or portions of the first side 28, the second side 30, and/or the perimeter edge 32. The thermoplastic overmold 62 may additionally be formed on the composite material band 48. For example, the thermoplastic overmold 62 of FIGS. 3C and 4C includes a perimeter overmold portion 66 formed on the composite material band 48, the first side 28, and the second side 30. The perimeter overmold portion 66 extends along the perimeter edge 32 and/or the composite material band 48 about (e.g., completely around) the composite sheet 22. The thermoplastic overmold 62 of FIGS. 3C and 4C further includes aperture overmold portions 68. Each aperture overmold portion 68 is formed on the first side 28, the second side 30, and on the composite body 24 within a respective one of the one or more apertures 26. Each aperture overmold portion 68 may be formed to extend circumferentially about (e.g., completely around) a respective one of the one or more apertures 26. Portions of the composite body 24, such as portions of the first side 28, the second side, and/or the perimeter edge 32 may not be overmolded by the thermoplastic overmold 62. For example, portions of the first side 28 and/or the second side 30 between the perimeter overmold portion 66 and the aperture overmold portion 68 may not be overmolded (e.g., coated, covered, etc.) by the thermoplastic overmold 62. It should be understood, however, that the present disclosure is not limited to the particular thermoplastic overmold 62 configuration of FIGS. 3C and 4C and that characteristics of the thermoplastic overmold 62 may be tailored for the manufacture of different components having different sizes, shapes, orientations, loading configurations, and the like.

The thermoplastic overmold material may include, for example, thermoplastic resins such as, but not limited to, polyether ketone ketone (PEKK), polyether ether ketone (PEEK), polyaryletherketone (PAEK), polyphenylene sulfide (PPS), or the like. The thermoplastic resin of the thermoplastic overmold material may be selected for compatibility with the thermoplastic polymer material of the composite material tape 40.

Application of the injection molding process to the thermoplastic continuous-fiber composite sheet 22 facilitates the manufacture of high-strength composite components (e.g., the component 20) requiring significantly less manufacturing time in comparison to conventional compression forming processes for composite consolidation and finishing. The injection molding process further facilitates manufacture of composite components with highly-accurate dimensioning and the ability to form component surface textures without further finishing processes. Moreover, we have found that the heat and pressure provided by the injected thermoplastic overmold material of the injection molding process facilitates removal of voids formed between layers of the composite material tape 40 applied during additive manufacturing of the thermoplastic continuous-fiber composite sheet 22. High void content (e.g., greater than one percent by volume of the composite body 24) of an additively manufactured component may result in a reduction of component strength as well as in increase in the likelihood of component failure (e.g., crack formation, delamination, etc.). Application of the present disclosure injection molding process to the thermoplastic continuous-fiber composite sheet 22 facilitates a reduction in the void content of the thermoplastic continuous-fiber composite sheet 22 to suitable levels (e.g., less than one percent by volume of the composite body 24). Accordingly, the application of the present disclosure injection molding process to the thermoplastic continuous-fiber composite sheet 22 may improve the strength and operational life of the underlying present disclosure injection molding process to the thermoplastic continuous-fiber composite sheet 22 and, hence, the resultant component 20.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for forming a thermoplastic composite component (20), the method comprising:
forming a composite sheet (22) using an additive manufacturing assembly (36), the composite sheet (22) including a thermoplastic continuous-fiber body (24) including a first side surface (28), a second side surface (30), and a perimeter edge (32), the first side surface (28) disposed opposite the second side surface (30), the perimeter edge (32) circumscribing the first side surface (28) and the second side surface (30); and
applying a thermoplastic overmold (62) onto the thermoplastic continuous-fiber body (24) along at least the perimeter edge (32) using an injection molding assembly (50).

2. The method of claim 1, further comprising applying a thermoplastic continuous-fiber perimeter band (48) onto the perimeter edge (32) subsequent to forming the composite sheet (22) and prior to applying the thermoplastic overmold (62) onto the thermoplastic continuous-fiber body (24).

3. The method of claim 2, wherein applying the thermoplastic overmold (62) onto the thermoplastic continuous-fiber body (24) includes applying the thermoplastic overmold (62) onto the thermoplastic continuous-fiber band (48).

4. The method of claim 1, 2 or 3, wherein forming the composite sheet (22) includes forming at least one aperture (26) of the composite sheet (22), the at least one aperture (26) extending through the thermoplastic continuous-fiber body (24) from the first side surface (28) to the second side surface (30).

5. The method of claim 4, wherein applying the thermoplastic overmold (62) onto the thermoplastic continuous-fiber body (24) includes applying the thermoplastic overmold (62) onto one or both of the first side surface (28) and the second side surface (30) along the at least one aperture (26).

6. The method of any preceding claim, wherein:
the injection molding assembly (50) includes a mold (52); and
applying the thermoplastic overmold (62) onto the thermoplastic continuous-fiber body (24) includes positioning the thermoplastic continuous-fiber body (24) in the mold (52) and injecting a heated and pressurized molten thermoplastic overmold (62) material into the mold (52) to form the thermoplastic overmold (62) on the thermoplastic continuous-fiber body (24).

7. The method of claim 6, wherein applying the thermoplastic overmold (62) onto the thermoplastic continuous-fiber body (24) further includes reducing a void content of the thermoplastic continuous-fiber body (24) to less than one percent by volume of the thermoplastic continuous-fiber body (24).

8. A method for forming a thermoplastic composite component (20), the method comprising:
forming a composite sheet (22) using an additive manufacturing assembly (36), the composite sheet (22) including a thermoplastic continuous-fiber body (24) including a first side surface (28), a second side surface (30), and a perimeter edge (32), the first side surface (28) disposed opposite the second side surface (30), the perimeter edge (32) circumscribing the first side surface (28) and the second side surface (30);
applying a thermoplastic continuous-fiber perimeter band (48) onto the perimeter edge (32); and
applying a thermoplastic overmold (62) onto the thermoplastic continuous-fiber perimeter band (48), the first side (28), and the second side (30) using an injection molding assembly (50).

9. The method of claim 8, wherein the thermoplastic continuous-fiber perimeter band (48) extends completely about the composite sheet (22) along the perimeter edge (32),
wherein, optionally, the thermoplastic overmold (62) forms a perimeter overmold portion (66) extending about the composite sheet (22) along the continuous-fiber perimeter band (48).

10. The method of claim 8 or 9, wherein applying the thermoplastic overmold (62) onto the thermoplastic continuous-fiber perimeter band (48), the first side (28), and the second side (30) further includes reducing a void content of the thermoplastic continuous-fiber body (24) to less than one percent by volume of the thermoplastic continuous-fiber body (24).

11. The method of any preceding claim, wherein forming the composite sheet (22) includes depositing a plurality of layers of a continuous-fiber tape (40) with the additive manufacturing assembly (36).

12. The method of any preceding claim, wherein the continuous-fiber tape (40) includes a continuous carbon fiber reinforcing material impregnated with a thermoplastic polymeric matrix material.

13. A method for forming a thermoplastic composite component (20), the method comprising:
forming a composite sheet (22) using an additive manufacturing assembly (36), the composite sheet (22) including a thermoplastic continuous-fiber body (24); and
applying a thermoplastic overmold (62) onto the thermoplastic continuous-fiber body (24) with an injection molding assembly (50) by:
positioning the thermoplastic continuous-fiber body (24) between a first mold plate (56) and a second mold plate (58) of a mold (52) of the injection molding assembly (50); and
injecting a heated and pressurized molten thermoplastic overmold material into the mold (52) to form the thermoplastic overmold (62) on the thermoplastic continuous-fiber body (24) and to reduce a void content of the thermoplastic continuous-fiber body (24) to less than one percent by volume of the thermoplastic continuous-fiber body (24).

14. The method of claim 13, wherein the thermoplastic continuous-fiber body includes a first side surface (28), a second side surface (30), and a perimeter edge (32), the first side surface (28) disposed opposite the second side surface (30), the perimeter edge (32) circumscribing the first side surface (28) and the second side surface (30), and the thermoplastic continuous-fiber body (24) forms one or more apertures (26) of the composite sheet (22), the one or more apertures (26) extending through the thermoplastic continuous-fiber body (24) from the first side surface (28) to the second side surface (30).

15. The method of claim 14, wherein:
the thermoplastic overmold (62) includes a perimeter overmold portion (66) disposed on the perimeter edge (32), the first side (28), and the second side (30), wherein, optionally, the perimeter overmold portion (66) extends completely around the thermoplastic continuous-fiber body (24) along the perimeter edge (32); and/or
the thermoplastic overmold (62) includes an aperture overmold portion (68) disposed on the first side (28), the second side (30), and the thermoplastic continuous-fiber body (24) within a first aperture of the one or more apertures (26).
